# EUROPEAN PATENT SPECIFICATION

(11) **EP 0 527 675 B1**
(45) Date of publication and mention of the grant of the patent: **29.12.1999**
(21) Application number: 92402244.5
(22) Date of filing: 06.08.1992
(51) Int. Cl.: H01J 47/12, G01T 1/185, G01V 5/10

(54) **Neutron detectors**
Neutronendetektoren
Détecteurs de neutrons

(30) Priority: 08.08.1991 US 742778
(43) Date of publication of application: 17.02.1993
(73) Proprietor: SCHLUMBERGER LIMITED, New York, N.Y. 10172 (US); SERVICES PETROLIERS SCHLUMBERGER, F-75007 Paris (FR); SCHLUMBERGER TECHNOLOGY B.V., NL-2517 KM Den Haag (NL); SCHLUMBERGER HOLDINGS LIMITED, Road Town, Tortola (VG)
(72) Inventor: Wraight, Peter, Missouri City, Texas 77459 (US)
(74) Representative: Hagel, Francis

(56) References cited:
- DE-A- 2 805 568
- DE-A- 3 437 104
- FR-A- 1 596 082
- US-A- 3 710 166
- US-A- 4 463 264

## Description

### BACKGROUND OF THE INVENTION

This invention relates to neutron detectors for use in nuclear well logging techniques, wherein a sonde is lowered in a well or borehole and the earth formations surrounding the well are irradiated with neutrons from a neutron source disposed in the sonde. Radiations resulting from the interaction between the formation atoms and the emitted neutrons are detected and processed in order to derive information on the composition and/or the physical structure of the earth formation, or the borehole fluid, or the annulus including casing and cement located between the borehole wall and the formation. The invention can also be applied to logging while drilling techniques (usually referred to as "LWD") where measurement devices, disposed close to the bottom of a borehole drilling system, perform measurements while the borehole is drilled.

The nuclear well logging techniques involving the irradiation of formation with neutrons, can be broken down in two categories, depending on the radiation detected. In a first family, one detects gamma rays resulting from the capture, inelastic or activation reactions between irradiating neutrons and the formation atoms. In the second family, one detects the irradiating neutrons after they collide several times with atoms of the formation. The invention pertains to the second family, wherein the sonde includes a neutron source and at least a neutron detector, and from the detected neutrons are generated "neutron logs".

Neutron logs are used principally for delineation of porous formations and determination of their porosity. They respond primarily to the amount of hydrogen in the formation. Neutrons are electrically neutral particles, each having a mass almost identical to the mass of a hydrogen atom. High-energy (fast) neutrons are continuously emitted from a radioactive source in the sonde. These neutrons collide with nuclei of the formation materials in what may be thought of as elastic "billiard-ball" collisions. With each collision, the neutron loses some of its energy. The amount of energy lost per collision depends on the relative mass of the nucleus with which the neutron collides. The greater energy loss occurs when the neutron strikes a nucleus of practically equal mass, i.e., a hydrogen nucleus. Collisions with heavy nuclei do not slow the neutron very much. Thus, the slowing of neutrons depends largely on the amount of hydrogen in the formation. Within a few microseconds, the neutrons have been slowed by successive collisions to thermal velocities, corresponding to energies of around 0.025 eV. They then diffuse randomly, without losing more energy, until they are captured by the nuclei of atoms such as chlorine, hydrogen, or silicon. The capturing nucleus becomes intensely excited and emits a high-energy gamma ray of capture. Depending on the type of neutron tool, either these capture gamma rays or the neutrons themselves are detected and counted by a detector in the sonde. When the hydrogen concentration of the material surrounding the neutron source is large, most of the neutrons are slowed and captured within a short distance of the source. On the contrary, if the hydrogen concentration is small, the neutrons travel farther from the source before being captured. Accordingly, the counting rate at the detector increases for decreased hydrogen concentration, and vice versa. Examples of such logging sonde are described in U.S. Patents No. 3,509,343 to Locke, or No. 4,223,218 to Jacobson, or No. 4,926,044 to Wraight, which are all assigned to the assignee of the present application. Neutron detectors are generally of the so-called proportional type, containing ionizable gas, such as e.g. helium-3 (He₃). He₃ detectors are exemplified in U.S. Patents 3,240,971 or 3,102,198, or in the article "Recent Improvements in Helium-3 Solid State Neutron Spectrometry", by T.R. Jeter and M.C. Kennison, IEEE Transactions on Nuclear Science, Feb 1967, vol. NS-14, No. 1, pages 422-427, or in the book from G.F. Knoll, "Radiation Detection and Measurement", Second Edition, 1989, p. 494-496.

The above mentioned nuclear logging sondes raise two problems.

Firstly, since a neutron detector has substantially no background counts, it emits no signal in the absence of the neutron source of the sonde. This results in a detrimental uncertainty as to the operation of the detector. Accordingly, it is highly desirable to be able to verify or check, before the sonde is lowered in the well, that the neutron detector actually and properly works.

As a matter of general interest, the word "verification" here refers to a checking step of the "go - nogo" type. The word "calibration" here refers to ascertaining that the detector response, outside the well is the same as the response established during shop calibration. Finally, "stabilize" and "stabilization" here refer to any step aiming at checking that the response of the detector, while in operation in the well, do not show any substantial modifications, such as e.g. offset or drift, which would be detrimental to the measurements.

The second problem encountered by the known nuclear logging sondes relates to the calibration of the detector(s) in the sonde. Calibration consists of adjusting at the wellsite, prior to logging the well, the tool response to match that of the engineering reference established under laboratory conditions. This accounts for variation in detector sensitivity from tool to tool and with time. It also accounts for variation in source strength, which changes with time. What is known as the wellsite calibration is actually not a primary calibration, but rather a "verification", the purpose of which is to confirm that the tool is functioning and that its response has not changed since the last "shop" calibration which are carried out in designated area under predetermined conditions and using a specific set-up. This verification is typically done by monitoring tool response to a point source of γ rays or neutrons strapped onto the tool before it is lowered in the well for logging. The article "Recommendations for Neutron Logging from the SPWLA Subcommittee for Log Calibration Guidelines", by R. Wiley and L.S. Allen, The log Analyst, May-June 1988, pages 204-214, provides general background on the known methods for calibrating, at the surface, neutron detectors disposed in a logging sonde.

The above mentioned "surface" calibration methods suffer from various disadvantages.

They are based on the use of an external radioactive source which raises safety concerns. Strict regulations have been and are still being enacted which set forth the steps to take in view of minimizing, if not avoiding, the risk of accident. Implementing these,regulations make the logging operations more complex and time consuming.

Furthermore, the hardware or set-up used to perform surface calibrations is designed to allow easy transportation, at the cost of being sensitive to the surrounding environment. In order to minimize, if not avoid, the influence of the environment, surface calibrations have to be performed according to strict guidelines. Consequently, those calibrations are time consuming. This is detrimental in a business environment where time is highly priced.

Moreover, being carried outside the well, these surface calibration methods do not provide any assurance to the operator that the detector is actually and properly working during the logging of the well. For the same reason, the detector response they provide is not representative of the downhole conditions especially in term of temperature and pressure.

As an attempt to remedy this situation, it has been proposed to carry out verification "in-situ", i.e. in the well, shortly prior to and following the logging operations, as explained in the article "A New Calibration, Wellsite Verification, and Log Quality-Control System for Nuclear Tools", by J.R. Olesen, SPWLA 31^{rst} Annual Logging Symposium, June 24-27, 1990, Paper PP. The in-situ verification method is usually referred to as the "plateau" method. The plateau refers to a flat part of the curve of total count rate versus detector high voltage. The detector voltage is adjusted so that the operating point is at the middle of the plateau, thereby ensuring constant detector sensitivity regardless of variation in temperature. The plateau test shows whether the tool is working in its middle range, the optimal operating point, rather than near the end. If the tool is working in the middle range of the plateau, this verifies that analog parts of the tool system have not drifted. Before logging, this verification is done typically a few hundred feet below surface where the tool is still at quasi-surface temperature and pressure. After logging, the verification is repeated typically just above the casing shoe,,where the tool remains at logging temperature and pressure. The main advantage of the in-situ method compared with the surface method is that it is performed at in-situ temperature and pressure, and it is claimed to verify tool performance under operating conditions. For detectors showing the "plateau" phenomenon, the verifications carried out shortly before and after logging usually involve signals generated 1) by a special wellsite verification device, or 2) by the wellbore and logging source (as described in the above mentioned article by J.R. Olesen). The data obtained during these verifications are compared to similar data obtained at the time of the shop calibration. This verifies that, before and just after logging, the hardware was set at a stable operating condition similar to shop calibration conditions.

However, this "in-situ" verification method, although substantially improving over "surface" verification methods, does not overcome all the drawbacks of the latter. Particularly, the "in-situ" method is not performed in real time but actually is a verification "after the facts".

In view of the above, there is a strong need for a method which would provide the user with a reliable answer as to whether a neutron detector, especially before it is lowered in a well, actually and properly works.

Moreover, beside the above referred to verification, it is high desirable to stabilise, especially in real time, the actual response (usually a spectrum) of a neutron detector operating in a well.

### OBJECTS OF THE INVENTION

A first object of this invention is to provide a method for reliably and quickly verifying the operation of a neutron detector.

A second object is to perform such verification in real time and safely without the use of a strong neutron source.

A third object of the invention, in one of its preferred implementations, is to provide a reliable method for stabilising, in real time, the response of a neutron detector while in use in a well.

### SUMMARY OF THE INVENTION

According to the present invention, there is provided a radiation detector of the proportional counter type for detecting neutrons in the thermal and epithermal energy regions, the detector comprising:
a pressure-tight closed container pervious to transmission therethrough of neutrons in the thermal and epithermal energy regions;
an electrode extending through said container in spaced relation with the enclosing walls and insulated therefrom;
a detector gas within said container of composition and pressure selected for sensitivity to neutrons in the thermal and epithermal regions, said detector gas consisting of high purity helium-3 at a pressure of at least two and one half atmospheres absolute; and
circuit connections extending to said electrode and to said container for application thereto of an electrical potential;
said detector being characterized by a radioactive source disposed within the container, said source being arranged to ionise the detector gas in the container of said electrode so as to cause said detector to produce at said circuit connections an energy peak signal characteristic of said source for verification and/or stabilization purposes, and having a radioactivity level of less than 5 nanocuries.

In a preferred embodiment of the invention, the radioactive source has a characteristic peak at energies greater than 3 MeV.

Preferably, the radioactive source is an alpha source comprising a uranium or americium radioisotope, deposited inside the detector in the form of a thin foil of metal or other material.

The characteristics and advantages of the invention will appear better from the description to follow, given by way of a nonlimiting example, with reference to the appended drawings in which:

### BRIEF DESCRIPTION OF THE DRAWINGS

Figure 1 is a schematic representation of a logging sonde according to the invention;
Figure 2 shows a cross section of a He₃ detector including the verification and stabilization means of the invention; and
Figure 3 is a graphical representation of a typical spectrum of detected neutrons and the ionization pulses generated by the radioactive source, during operation in a well.

### DESCRIPTION OF THE INVENTION

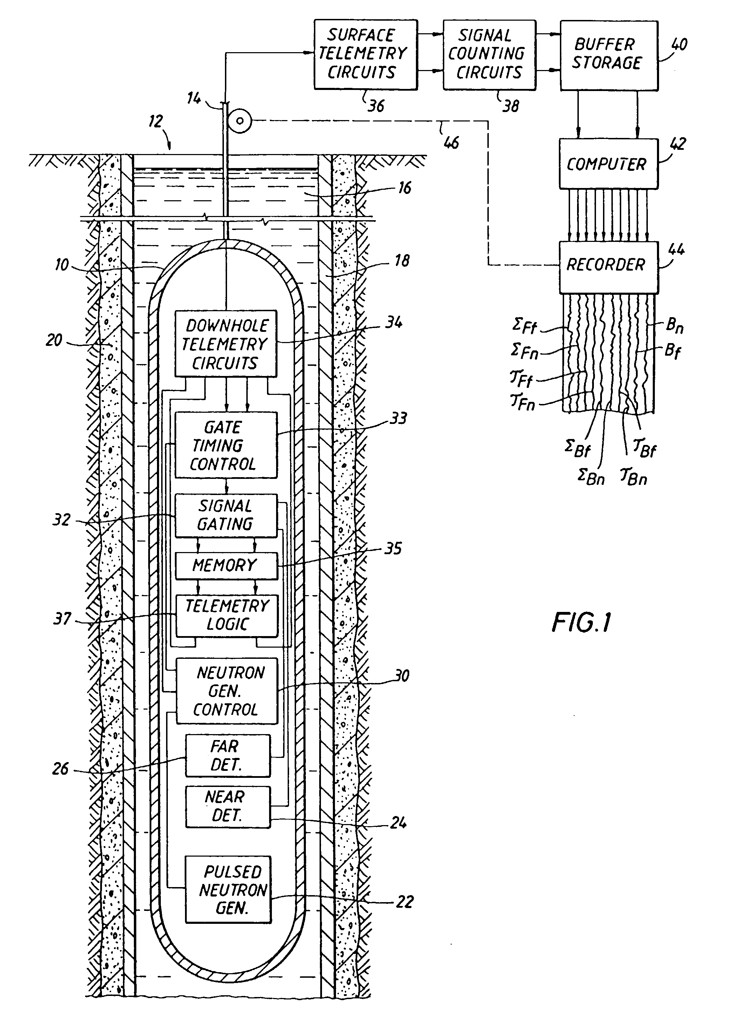

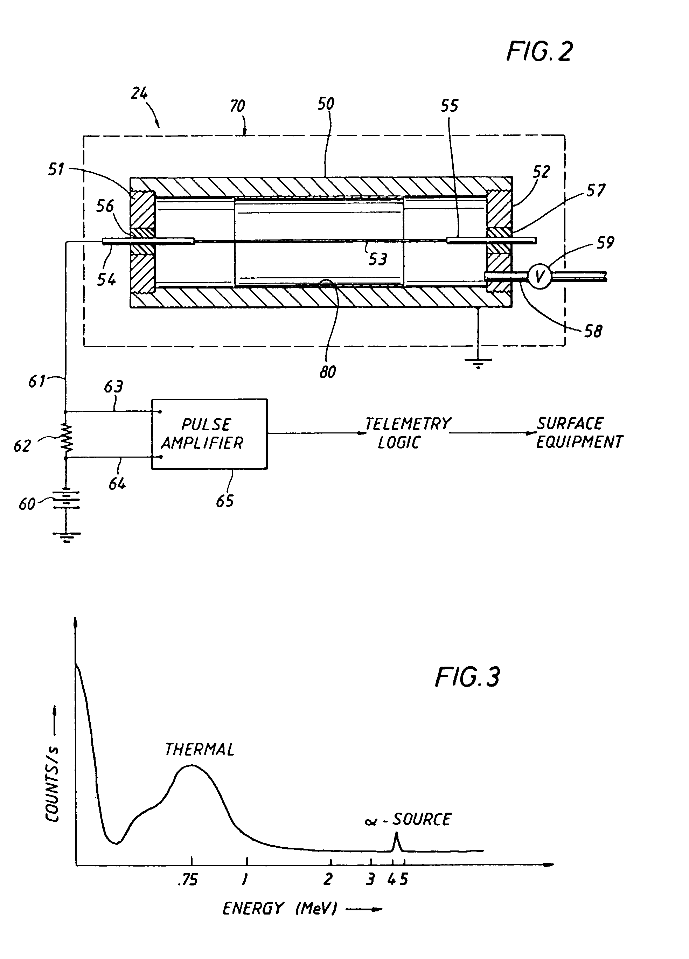

This invention relates to a novel and improved method for verifying, calibrating and otherwise stabilizing a neutron detector for use in a logging sonde, and to such detector and to such logging sonde as well, which is hereafter described in detail with reference to FIG. 1. The apparatus needed to accomplish the method might be of the type of that disclosed in U.S. Patent 3,509,343 to S. Locke, U.S. Patent 4,223,218 to Jacobson, U.S. Patent 4,423,323 to Ellis & Flaum, U.S. Patent 4,760,252 to Albats & Antkiw, or U.S. Patent 4,926,044 to P. Wraight. These five patents are assigned to the assignee of the present application. For an overall description of the tool, telemetry and surface instrumentation, the introductory portion of U.S. Patent 4,926,044 is repeated below, in connection with Fig. 1, before turning to the description of the detector and the verification and stabilization method, in connection with Fig. 2 & 3.

FIG. 1 shows a well logging tool including a fluid-tight, pressure-and-temperature resistance sonde or tool 10 that is adapted to be suspended in and moved through a well bore 12 by an armored cable 14. The well bore 12 is illustrated as containing a borehole fluid 16 and as including a steel casing 18 and surrounding cement annulus 20. Although no tubing is shown in the borehole, the tool 10 may if desired be sized for through-tubing use. The downhole tool 10 includes a pulsed neutron generator 22 and two neutron detectors 24 and 26 that are located at different spacings from the neutron generator 22. The detector 24 spaced closest to the neutron generator is designated the "near" detector and the detector 26 located farther from the neutron source is designated the "far" detector. The neutron generator 22 is preferably of the type which generates discrete pulses of fast neutrons, e.g. 14 Mev., and may for example be of the types described in more complete detail in U.S. Patent 2,991,364 to C. Goodman, or U.S. Patent 3,546,512 to A.H. Frentrop. Operation of the neutron generator 22 is controlled in part by a neutron generator control circuit 30, and this circuit may also be of the type described in the aforementioned patents. The detectors 24 and 26 may be of any construction suitable for the detection of the thermal neutron concentrations in the surrounding earth formation and, to that end, may be of the thermal neutron sensitive type, e.g. helium 3 filled proportional counters. It will also be understood that other downhole power sources (not shown) are provided as required to drive the neutron generator 22 and other downhole circuits. Power for the well tool 10 is supplied over the cable 14 from a surface power supply (not shown), as is conventional.

Output pulses from the neutron detectors 24 and 26, representative of the concentration of thermal neutrons in the irradiated formation, are applied to signal gating circuits 32. The signal gating circuits 32 are controlled by gate timing circuits 33, which also control the operation of the neutron generator control circuit 30. From the signal gating circuits 32 the detector signals are counted and stored in memory circuits 35 and thence, under control of telemetry logic circuits 37, are applied to downhole telemetry circuits 34 for transmission to the surface over the cable 14. The overall design of the neutron generator control circuit 30, the signal gating circuits 32, the gate timing circuits 33, the memory circuits 35, and the telemetry circuits 34 is similar to that described in the above mentioned U.S. Patents 4,926,044 or 4,223,218 but are not described here for the sake of brevity. The circuits are designed to achieve the timing schedules for neutron bursting and detection. The downhole telemetry circuits 34 may be of any known construction for encoding, time division multiplexing, or otherwise preparing the data-bearing signals applied to them from the telemetry logic circuits 37 and for impressing such data on the cable 14. At the earth's surface, the data-bearing signals from the near and far detectors 24 and 26, respectively, are amplified, decoded, demultiplexed and otherwise processed as needed in the surface telemetry circuits 36, which may also be conventional. The telemetry circuits 34 and 36 also include circuits for the receipt and transmission, respectively, of command messages from the surface. Suitably, the circuits 34 and 36 comprise a bi-directional data telemetry system useful for these purposes and having a 10K bit per second upward data rate. Following surface telemetry circuits 36 the near-detector and far-detector signals are separately counted in signal counting circuits 38 to acquire the thermal neutron decay curve data over a desired accumulation interval Δt. Upon termination of the data accumulation time Δt, which may be selected, for example, to correspond to a desired interval of depth in accordance with logging speed of the tool, the count rate data accumulated in the signal counting circuits 38 and transferred to buffers 40 and the signal counting circuits 38 are reset to zero. From storage 40, the count rate data are processed in a computer 42, which suitably comprises a micro-processor or, alternatively, a general purpose digital computer such as that manufactured by Digital Equipment Corporation, Maynard, Mass., under the designation PDP-11. As is described more fully hereinafter, the computer 42 processes the count rate data from the respective detectors to develop various desired outputs, including, for example, the decay time constants of the borehole and formation as measured with the near detector, τ_{Bn} and τ_{Fn}, and the decay time constants of the borehole and formation as measured with the far detector, τ_{Bf} and τ_{Ff}, the corresponding macroscopic capture cross-sections Σ_{Bn}, Σ_{Bf}, Σ_{Fn} and Σ_{Ff}, and various other selected outputs such as background counting rating Bₙ and B_{f}, from the respective detectors. All of these outputs may be recorded in conventional fashion as a function of tool depth in a recorder 44. The usual cable-following mechanical linkage, indicated diagrammatically at 46 in FIG. 1, is provided for this purpose.

The neutron detector according to the invention, e.g. detector 24 of Fig. 1, will be hereafter described in detail, in connection with Fig. 2.

Detector 14 comprises a cylinder 50 made of material which does not show any neutron resonances in the thermal and epithermal regions. Cylinder 50 may be made eg of aluminium. On both ends of cylinder 50 are threaded respective end plates 51, 52 in such a way that the inside volume delimited by cylinder 50 and end plates 51 and 52 defines a high pressure gas sealed chamber. An electrode 53 made of a metallic wire, substantially centred in cylinder 50, is anchored at both ends thereof in end plates 51 and 52 by means of respective rods 54 and 55. Rods 54 and 55 extend through respective rings 56, 57 centred in end plates 51, 52 respectively. Rings 56, 57 are designed to mechanically maintain and electrically insulate rods 54, 55 (and thus electrode 53) from the metallic structure of end plates 51, 52 and cylinder 50. For example, rings 56, 57 are made of quartz or ceramic. A tube 58 extends through end plate 52 and is provided with a pressure valve 59. Tube 58 is connected to a high pressure gas source (not shown). When completed, the above described structure is filled through tube 58 with high pressure He₃ gas. A dotted line 70 surrounding cylinder 50 represents an optional shield made of cadmium or boron designed to absorb thermal neutrons and pass epithermal neutrons to the inside of cylinder 50.

The electrode 53 is electrically connected to a DC source 60 through a line 61 and a resistor 62. Cylinder 50, and the pole of DC source 60 opposed to resistor 62, are connected to ground. Voltage developed across resistor 62 is applied (through appropriate connections 63, 64) to a pulse amplifier 65. As it is known in the art, signals output from amplifier 65 are processed and transmitted to the surface equipment through the downhole circuits provided in the sonde 10, as shown on Fig. 1.

More details on the overall construction of detector 24 can be found in U.S. Patents No. 3,102,198 to T.W. Bonner, or No. 3,240,971 to I.L. Morgan.

A means for verifying the operation of the detector is provided inside thereof, in particular in the form of an alpha source. The alpha source might include any radioisotope source which emits alpha particles by radioactive decay (see Knoll's book, Table 1-3, page 9, and page 7, Chapter 1, III, A, last paragraph) for example, uranium or americium. Preferably, the radioisotope is deposited inside the cylinder 50 in the form of a thin foil 80, e.g. a metallic foil. In a preferred embodiment, the alpha source is chosen in a way its emission does not interfere with the neutron counts resulting from the actual measurement carried out in the well. For illustrative purpose, the alpha source generates a few counts per second (cps), typically 10 cps, which is far below the lowest count rate that is detected in operation in the well.

Moreover, the alpha source has an activity below the typical threshold value (usually called "wipe test" threshold) of 5 nanocurie, established by regulation for safety purpose.

The internal alpha source provides a reliable and clear indication of the correct operation of the detector. This eliminates the need for the known external strong sources which, as already stated above, are cumbersome and may be detrimental to safety. Also, using an alpha source is beneficial since alpha particles constitute the ionization particles themselves which results in almost 100% detection. Finally, the alpha source has a very weak activity, of the order of 1 nanocurie which is compatible with safety concerns and does not interfere with count rates resulting from actual measurements in the well.

Furthermore, the internal alpha source allows one to stabilize the response of the detector while in use in the well. The response is a spectrum generated from the neutrons which are detected after they have interacted with the atoms of the formation. The emission spectrum of an alpha source shows an energy peak, around 4 Mev, which is clearly distinguishable from the detected spectrum. Fig. 3 is a representation of a typical measured spectrum (counts per second versus energy) of detected neutrons and the ionization pulses generated by the radioactive source, during operation in a well. The energy scale is nonlinear for the sake of clarity. The measured spectrum shows a protuberance in the thermal region (0.75 Mev) and an energy peak at 4.2 Mev representative of the internal alpha source. The alpha source energy peak can be used as a stabilization peak, while logging, thus providing control over the gain response of the detector.

According to an alternate embodiment which is not within the scope of the claims, the stabilization is performed by using the thermal neutron peak itself.

The stabilization process, based on the use of the alpha source peak or the thermal neutron peak, can be carried out in any conventional way. For example, one could use the method described in U.S. Pat. No. 3,976,878 to P. Chevalier and B. Seeman. According to the method depicted in the '878 patent, two count rates M₁ and N₁ are measured in two windows of predetermined width located on each side of the 4.2 MeV energy peak of the stabilization source (i.e. the alpha source). An error signal, which is a function of the difference (M₁-N₁), is used to control a functioning parameter, such as the high voltage which affects the gain, of the detector through a negative feedback loop. Alternately, the gain stabilization can be performed as taught in Knoll's book, pages 670-672, paragraph entitled "Spectrum stabilization".

## Claims

1. A radiation detector of the proportional counter type for detecting neutrons in the thermal and epithermal energy regions, the detector comprising:
a pressure-tight closed container (50, 51, 52) pervious to transmission therethrough of neutrons in the thermal and epithermal energy regions;
an electrode (53) extending through said container (50, 51, 52) in spaced relation with the enclosing walls and insulated therefrom;
a detector gas within said container (50, 51, 52) of composition and pressure selected for sensitivity to neutrons in the thermal and epithermal regions, said detector gas consisting of high purity helium-3 at a pressure of at least two and one half atmospheres absolute; and
circuit connections (54, 55, ground) extending to said electrode (53) and to said container (50, 51, 52) for application thereto of an electrical potential;
said detector being characterized by a radioactive source (80) disposed within the container, said source being arranged to ionise the detector gas in the container of said electrode (53) so as to cause said detector to produce at said circuit connections (54, 55, ground), an energy peak signal characteristic of said source for verification and/or stabilization purposes, and having a radioactivity level of less than 5 nanocuries.

2. The radiation detector of claim 1, wherein said high purity helium-3 gas is present at a pressure of at least seven atmospheres absolute.

3. The radiation detector of any preceding claim, in which said radioactive source (80) emits alpha particles at a rate of about ten counts per second.

4. The radiation detector of any preceding claim, in which said radioactive source (80) has a characteristic peak at energies greater than 3 MeV.

5. The radiation detector of any preceding claim, in which said radioactive source (80) is an isotope of uranium.

6. The radiation detector of any one of claims 1 to 4, in which said radioactive source (80) is an isotope of americium.

7. The radiation detector of any preceding claim, in which said radioactive source is in the form of a cylindrical foil (80) disposed on the inside of a cylindrical wall (50) of said container (50), 51, 52).

## Patentansprüche

1. Strahlungsdetektor des Proportionalzählertyps zum Erfassen von Neutronen in den thermischen und epithermischen Energiebereichen,umfassend:
einen druckdichten, geschlossenen Behälter (50, 51, 52), der für den Durchgang von Neutronen in den thermischen und epithermischen Energiebereichen durchlässig ist;
eine Elektrode (53), die durch den Behälter (50, 51, 52) in einem Abstand zu den umschließenden Wänden und hiervon isoliert verläuft;
ein Detektorgas im Behälter (50, 51, 52), dessen Zusammensetzung und Druck so gewählt sind, daß es für Neutronen in den thermischen und epithermischen Bereichen empfindlich ist, wobei das Detektorgas aus hochreinem Helium-3 unter einem absoluten Druck von wenigstens zweieinhalb Atmosphären besteht; und
Schaltungsverbindungen (54, 55, Masse), die zur Elektrode (53) und zum Behälter (50, 51, 52) verlaufen, um daran ein elektrisches Potential anzulegen;
wobei der Detektor gekennzeichnet ist durch eine radioaktive Quelle (80), die im Behälter angeordnet und so beschaffen ist, daß sie das Detektorgas im Behälter der Elektrode (53) ionisiert, damit der Detektor an den Schaltungsverbindungen (54, 55, Masse) ein für die Quelle charakteristisches Energiepeaksignal für Verifikations- und/oder Stabilisierungszwecke erzeugt, und einen Radioaktivitätspegel von weniger als 5 Nanocuries besitzt.

2. Strahlungsdetektor nach Anspruch 1, wobei das hochreine Helium-3-Gas mit einem absoluten Druck von wenigstens sieben Atmosphären beaufschlagt ist.

3. Strahlungsdetektor nach einem der vorangehenden Ansprüche, in dem die radioaktive Quelle (80) Alphateilchen mit einer Rate von ungefähr 10 Zählimpulsen pro Sekunde emittiert.

4. Strahlungsdetektor nach einem der vorangehenden Ansprüche, in dem die radioaktive Quelle (80) einen charakteristischen Peak bei Energien von mehr als 3 MeV besitzt.

5. Strahlungsdetektor nach einem der vorangehenden Ansprüche, in dem die radioaktive Quelle (80) ein Isotop von Uran ist.

6. Strahlungsdetektor nach einem der Ansprüche 1 bis 4, in dem die radioaktive Quelle (80) ein Isotop von Americium ist.

7. Strahlungsdetektor nach einem der vorangehenden Ansprüche, in dem die radioaktive Quelle in Form einer zylindrischen Folie (80) vorliegt, die an der Innenseite einer zylindrischen Wand (50) des Behälters (50, 51, 52) angeordnet ist.

## Revendications

1. Détecteur de radiation du type compteur proportionnel pour détecter des neutrons dans les régions d'énergies thermique et épithermique, le détecteur comprenant :
- un récipient fermé (50,51,52) tenant la pression, transparent pour la transmission de neutrons à travers celui-ci dans les régions d'énergies thermique et épithermique ;
- une électrode (53) s'étendant dans ledit récipient (50,51,52), espacée par rapport aux parois environnantes et isolée de celles-ci ;
- un gaz détecteur dans ledit récipient (50,51,52) de composition et de pression choisies pour la sensibilité aux neutrons dans les régions thermique et épithermique, ledit gaz détecteur consistant en hélium-3 de grande pureté à une pression d'au moins 2,5 atmosphères absolues ; et
- des connexions de circuit (54,55,masse) s'étendant à ladite électrode (53) et audit récipient (50,51,52) pour y appliquer un potentiel électrique,
ledit détecteur étant caractérisé par une source radioactive (80) disposée dans le récipient, ladite source étant agencée de façon à ioniser le gaz détecteur dans le récipient de ladite électrode (53) afin que le détecteur produise auxdites connexions de circuit (54,55,masse) un signal à pic d'énergie caractéristique de ladite source à des fins de vérification et/ou de stabilisation, et ayant un niveau de radioactivité inférieur à 5 nanocuries.

2. Détecteur de radiation selon la revendication 1, dans lequel ledit gaz d'hélium-3 de grande pureté est présent à une pression d'au moins 7 atmosphères absolues.

3. Détecteur de radiation selon l'une quelconque des revendications précédentes, dans lequel ladite source radioactive (80) émet des particules alpha à une vitesse d'environ dix coups par seconde.

4. Détecteur de radiation selon l'une quelconque des revendications précédentes, dans lequel ladite source radioactive (80) a un pic caractéristique à des énergies supérieures à 3 MeV.

5. Détecteur de radiation selon l'une quelconque des revendications précédentes, dans lequel ladite source radioactive (80) est un isotope d'uranium.

6. Détecteur de radiation selon l'une quelconque des revendications 1 à 4, dans lequel ladite source radioactive (80) est un isotope d'américium.

7. Détecteur de radiation selon l'une quelconque des revendications précédentes, dans lequel ladite source radioactive est sous la forme d'une feuille cylindrique (80) disposée sur l'intérieur d'une paroi cylindrique (50) dudit récipient (50,51,52).
